# EUROPÄISCHE PATENTSCHRIFT

(11) **EP 2 957 419 B1**
(45) Veröffentlichungstag und Bekanntmachung des Hinweises auf die Patenterteilung: **04.09.2019**
(21) Anmeldenummer: 15167960.2
(22) Anmeldetag: 18.05.2015
(51) Int. Cl.: B29C 65/18

(54) **SCHWEISSSCHUH, SCHWEISSVORRICHTUNG UND SCHWEISSVERFAHREN**
WELDING SHOE, WELDING DEVICE AND METHOD FOR WELDING
PATIN DE SOUDAGE, DISPOSITIF DE SOUDAGE ET PROCÉDÉ DE SOUDAGE

(30) Priorität: 20.06.2014 DE 102014108669
(43) Veröffentlichungstag der Anmeldung: 23.12.2015
(73) Patentinhaber: Pflug Antriebs- und Fördertechnik, 89547 Gerstetten-Dettingen (DE)
(72) Erfinder: Pflug, Joachim, 89547 Gerstetten-Dettingen (DE)
(74) Vertreter: Frey, Sven Holger

(56) Entgegenhaltungen:
- US-A- 4 582 537

## Beschreibung

Die Erfindung betrifft einen Schweißschuh gemäß dem Anspruch 1, eine Schweißvorrichtung gemäß dem Anspruch 9 sowie ein Verfahren zum Verschweißen der Enden eines Gegenstands gemäß dem Anspruch 10. Allgemein bekannt sind Schweißgeräte, beispielsweise für Riemenprofile. Derartige Schweißgeräte bestehen aus einer Steuer- und einer Schweißeinheit mit wechselbaren Schweißschuhen für unterschiedliche Anwendungen. Mit der Schweißeinheit lassen sich die Enden von Riemen zu einem endlosen Ring verschweißen.

Beispielsweise sind aus der DE 10 2005 044 465 A1 Schweißschuhe für das sogenannte Extruderschweißen für den mobilen Handbetrieb bekannt. Bei derartigen Geräten ist es von Bedeutung, dass der verwendete Schweißschuh mit dem Schmelzgutkanal eines Kunststoffschweißextruders in Form und Material zusammenpasst. Es wird vorgeschlagen, den Schweißschuh aus Keramik auszubilden, welche gegenüber chemisch aggressiven Stoffen beständig ist. Auch Schweißschuhe aus Metall oder Kunststoffen sind bekannt.

Des Weiteren ist aus der DE 199 00 551 C1 ein Verfahren zum Herstellen eines endlosen Transport- oder Antriebsriemens aus einem thermoplastischen Kunststoff bekannt. In den Kunststoff sind zur Verstärkung Stapelfasern eingebettet. Zur Herstellung werden die Stapelfasern dem Kunststoff als Grundmaterial mit einem Anteil von 0,5 bis 40 Gewichtsprozent zugemischt. Danach wird der mit den Stapelfasern vermischte Kunststoff zu einem Profil extrudiert und das Profil in geeigneter Länge zu einem endlosen Riemen thermoplastisch verschweißt. Das Verschweißen erfolgt dabei homogen über den gesamten Profilquerschnitt. Immer wieder wird jedoch bei unterschiedlichen Anwendungen darüber berichtet, dass die Wärmeleitung eines Schweißschuhs, je nach verwendetem Material, nicht optimal zu den gewünschten Schweißbedingungen passt und in Folge dessen unbefriedigende Schweißnähte entstehen.

Aus der US 4 582 537 A ist eine elastomere kompressible Mischung bekannt, die die kompressiblen Eigenschaften eines Kautschuks oder einer gummiartigen Verbindung mit den Wärmeeigenschaften eines leitfähigen Metallelements aufweist. Dieses Verbundmaterial besteht aus zwei Teilen Tetrafluorethylenpulver und dem Rest aus etwa fünfundsiebzig Teilen wärmeleitendem Metallpulver wie Aluminiumpulver und fünfundzwanzig Teilen Silikonkautschuk. Diese Verbindung wird als flaches Blech an einem leitfähigen Metallstützelement befestigt oder kann eine Abdeckung für eine leitfähige Metallrolle sein. Diese Mischung wird verwendet, um unregelmäßige Dicken von thermoplastischen Filmen anzupassen. Diese elastomere Mischung wird als Material mit Wärme und Druck verwendet, um eine Versiegelung der erhitzten thermoplastischen Folie mit einer benachbarten Folie zu bewirken.

Aufgabe der Erfindung ist es, einen Schweißschuh und damit verbunden eine Schweißvorrichtung sowie ein zugehöriges Verfahren weiterzuentwickeln, um Schweißverbindungen weiter zu optimieren.

Erfindungsgemäß wird diese Aufgabe bezüglich eines Schweißschuhs mit den in Anspruch 1 genannten Merkmalen und bezüglich einer Schweißvorrichtung mit den in Anspruch 9 genannten Merkmalen gelöst. Zudem ist ein Verfahren zum Verschweißen der Enden eines Gegenstands im Anspruch 10 angegeben. Die weiteren rückbezogenen Ansprüche betreffen vorteilhafte Aus- und Weiterbildungen der Erfindung.

Die Erfindung schließt einen Schweißschuh mit einer Kontaktfläche, Seitenflächen und einer Rückseitenfläche ein, enthaltend einen Basiswerkstoff auf Kunststoffbasis mit einer Schweißzone zum Verschweißen eines Gegenstands.

Erfindungsgemäß ist zumindest in einem Teilbereich der Schweißzone ein die Wärmeleitfähigkeit erhöhender Materialzusatz eingebracht, welcher inhomogen verteilt ist.

Die Erfindung geht dabei von der Überlegung aus, den Schweißschuh zum Verschweißen der Enden eines Gegenstands einzusetzen, beispielsweise eines Transport- oder Antriebsriemens. Die Profilform derartiger Riemen ist in der Praxis oft sehr vielseitig ausgeführt, so dass jeweils eine entsprechend als Negativform angepasste Kontaktfläche zum Einsatz kommt. Ein Schweißschuh kann auch derart ausgeführt sein, dass gleichzeitig die Enden einer Vielzahl von parallel zueinander liegenden Riemen in einem Verfahrensschritt miteinander verschweißt werden können.

Die vergleichsweise kostengünstig herzustellenden erfindungsgemäßen Schweißschuhe stellen durch eine außerordentliche Formstabilität sicher, dass im Schweißbereich das thermisch erweichte Material durch den Druck der verwendeten Heizpresse homogen und vor allem auch blasenfrei ineinander fließt. Durch die im Schweißschuh eingearbeitete Profilform wird sichergestellt, dass sich sowohl in Längs- wie auch in Querrichtung das Profil eines Riemens an der Schweißstelle günstig ausbildet und den gleichen Querschnitt des Restriemens einnimmt. Gelegentlich kann es auch günstig sein, zusätzliches Material gleicher Beschaffenheit an der Schweißnaht einzubringen um Hohlräume zu vermeiden.

Ein Schweißschuh kann aus mehreren Teilen bestehen, in die eine Negativform des zu verbindenden Profils eingearbeitet ist. Auch Kombinationen aus profilierten und ebenen Teilen können günstig sein. So wird beispielsweise bei einem Zahnriemen ein Teil des Schweißschuhs analog zur Zahnung auf einer Seite und das andere Teil eben ausgebildet, um an der glatten Rückseite des Zahnriemens anzuliegen. Oft eignen sich zweiteilige Schweißschuhe mit einer Ober- und Unterseite besonders gut für den Einsatz.

Die Schweißzone mit dem die Wärmeleitfähigkeit erhöhenden Materialzusatz befindet sich meist im mittleren Bereich der Kontaktfläche eines Schweißschuhs. Die angrenzenden übrigen Bereiche bestehen nur aus dem Basiswerkstoff mit geringerer Wärmeleitfähigkeit. Durch diese Anordnung der Materialien werden keine weiteren Zusatzteile mehr benötigt, die ein zu verschweißendes Profil gerade halten und vor ungewolltem Knicken oder einer Deformation schützen.

Je nach Art und Menge des in der Schweißzone beigemischten Materials ergeben sich wünschenswerterweise unterschiedliche Wärmeleitungskoeffizienten. Diese beeinflussen sowohl die Schweißzeit, wie auch die Schweißtemperatur und den Schweißdruck, der auf das Riemenmaterial für einen homogenen Materialfluss ausgeübt werden muss. Mit den erfindungsgemäßen Schweißschuhen werden durch eine gute Materialvermischung an den beiden Profilenden Nähte mit hoher Festigkeit erzeugt. Ein Endlosriemen kann ohne weitere Nacharbeit unmittelbar zum Einsatz kommen. Durch eine homogene Verbindung ergeben sich bei unverstärkten Profilen nahezu identische Festigkeitswerte an der Nahtstelle, vergleichbar denen im übrigen Riemen. So ist eine Schweißnaht bezüglich der Zug- und Reißfestigkeit in vergleichbarem Maße wie der Restriemen belastbar.

Gegenüber den reinen Kunststoffformen ist bei den erfindungsgemäßen Schweißschuhen die Schweißzeit wesentlich reduziert. Der höchste Wärmeeintrag findet zudem genau an der zu verbindenden Nahtstelle statt. Die Umgebungswärme um die Zone des höchsten Wärmeeintrags sorgt für einen homogenen Materialfluss.

Ein besonderer Vorteil der Erfindung ist, dass sich beim Verschweißen der Enden im Schweißschuh kein Schweißwulst ausbildet und das Material bereits die endgültige Form annimmt. Das Material fließt durch den Schweißschuh vorgegeben an der Schweißnaht homogen ineinander. So wird ein bei anderen Verbindungsverfahren notwendiges Überarbeiten der Schweißverbindung entbehrlich. Hierdurch wird eine kostengünstigere Fertigung ermöglicht.

Ebenso von besonderem Vorteil ist, dass sich die zu verschweißenden Profile an den Austrittsstellen an den Seitenflächen des Schweißschuhs nicht wesentlich erwärmen. Hierdurch verbleibt das Profil ausreichend formstabil, ohne sich zu deformieren oder gar zu knicken. Der wesentliche Wärmeeintrag kommt folglich nur unmittelbar an der Schweißstelle zum Tragen. Demgegenüber können bei bisherigen reinen Metallschweißschuhen Knicke oder Deformationen der Riemen als ein unerwünschtes Ergebnis auftreten. Das gegebenenfalls außerhalb des Metallschweißschuhs benötigte Stabilisieren des Riemens durch zusätzliche Einrichtungen ist mit der erfindungsgemäßen Lösung nicht mehr nötig. Dies führt zu einer wesentlichen Vereinfachung bei der Herstellung von Endlosriemen und ermöglicht auch die Fertigung sehr kleiner Umfangslängen.

Vorteilhafterweise ist der die Wärmeleitfähigkeit erhöhende Materialzusatz inhomogen verteilt. Ein inhomogen verteilter Zusatz bewirkt lokal eine sich verändernde Wärmeleitfähigkeit im Schweißschuh. Damit kann der Wärmeeintrag während des Schweißprozesses entsprechend den gewünschten Erfordernissen variiert werden.

In bevorzugter Ausgestaltung kann der Mengenanteil des Materialzusatzes in der Schweißzone zumindest in einer Richtung zu den Seitenflächen hin abnehmen. Hierdurch kann sich ein gleichmäßiger Temperaturverlauf, ausgehend von der höchsten Temperatur, an den zu fügenden Enden des Gegenstands einstellen.

Des Weiteren kann vorteilhafterweise der Basiswerkstoff ein homogen gesinterter und temperaturbeständiger Kunststoff sein. Basiswerkstoffe mit einer Einsatztemperatur von bis zu 250 °C und gegebenenfalls auch darüber hinaus eignen sich hier besonders. Dieses Material ist zur besseren Wärmeleitung im Schweißzonenbereich bis zu einem erforderlichen Maß mit dem die Wärmeleitfähigkeit erhöhenden Materialzusatz vermischt.

Des Weiteren kann in bevorzugter Ausgestaltung der Erfindung der die Wärmeleitfähigkeit erhöhende Materialzusatz Metallpulver oder Keramikpulver oder ein Faserwerkstoff sein. Glasfasern können auch schichtweise parallel zur Kontaktfläche oder auch senkrecht zu ihr eingebracht werden. Vor allem in einer sehr schmalen Zone eingebrachte Pulver oder gar Fasergelege sorgen für einen hohen und ganz lokal begrenzten Wärmefluss im Schweißschuh.

Bevorzugt kann das Metallpulver oder Keramikpulver einen mittleren Korndurchmesser von 10 bis 250 µm aufweisen. Mit einem einheitlichen oder auch in gewissen Grenzen variierenden Korndurchmesser lässt sich mit einem gewissen Mindestfüllgrad ein Oberflächenkontakt zwischen den einzelnen Körnern selbst herstellen. Dieser gegenseitige Kontakt des gut wärmeleitenden Materials sorgt für einen unmittelbaren Wärmefluss über die Körner selbst. Thermische Barrieren im Basismaterial haben dann nur noch untergeordneten Einfluss auf den Wärmetransport.

Des Weiteren bevorzugt kann der die Wärmeleitfähigkeit erhöhende Materialzusatz Aluminium, Kupfer, Messing, Stahl, Edelstahl, Bronze, Gold, Silber, Siliciumcarbid, Aluminiumnitrid, Borcarbid, Bornitrid oder Mischungen der genannten Stoffe sein. Bei Verwendung von Messing als den die Wärmeleitfähigkeit erhöhenden Materialzusatz ist ein Volumenanteil von 55 bis 65 % beispielsweise besonders günstig für einen gezielten Wärmeeintrag. Geeignete temperaturbeständige Kunststoffe als Basiswerkstoff weisen meist eine Wärmeleitfähigkeit von unter 1 W/(mK) auf. Durch einen die Wärmeleitfähigkeit erhöhenden Materialzusatz aus Metallen und deren Legierungen, welche einen Wert von etwa 100 bis 400 W/(mK) aufweisen, kann mit entsprechenden Volumenanteilen eine ausreichend weite Spanne für eine gute Wärmeleitfähigkeit des Materials im Bereich der Schweißnaht erzielt werden.

In bevorzugter Ausgestaltung der Erfindung kann der die Wärmeleitfähigkeit erhöhende Materialzusatz in einem Volumenanteil von 10 bis 80 % eingebracht sein. Mit einem einheitlichen Korndurchmesser lässt sich bereits mit einem Füllgrad von etwa 74% einer dichten Kugelpackung bewirken, dass sich die einzelnen Kornoberflächen des Pulvers gegenseitig berühren. Dieser zumindest auch bei geringerem Füllgrad bereits lokal entstehende Kontakt bewirkt einen unmittelbaren Wärmeaustausch zwischen den Körnern und führt damit zu einer besonders guten thermischen Leitfähigkeit im Schweißschuh.

Vorteilhafterweise kann der die Wärmeleitfähigkeit erhöhende Materialzusatz in einem Volumenanteil von 40 bis 70 % eingebracht sein.

In vorteilhafter Ausgestaltung kann der Basiswerkstoff Polytetrafluorethylen (PTFE) sein. Eine vergleichsweise geringe Wärmeleitfähigkeit des PTFE von unter 0,25 W/(mK) ist z. B. mit Messing mit einer Wärmeleitfähigkeit von 120 W/(mK) geeignet zu kombinieren. Auch Aluminium mit einer etwas höheren Wärmeleitfähigkeit von 236 W/(mK) eignet sich besonders gut für eine Verwendung im Schweißschuh. Sollten noch höhere Werte der Wärmeleitfähigkeit erforderlich sein, so kann auch reines Kupferpulver zum Einsatz gelangen.

PTFE gehört zu den Thermoplasten, an denen nahezu keine anderen Materialien haften bleiben, da die Oberflächenspannung extrem niedrig ist. So führt eine Verwendung von PTFE auch kaum zu Verklebungen mit dem zu schweißenden Material. Der Basiswerkstoff Polytetrafluorethylen eignet sich mit einer Einsatztemperatur von bis zu 250 °C besonders gut.

Ein weiterer Aspekt der Erfindung schließt eine Schweißvorrichtung ein, welche einen erfindungsgemäßen Schweißschuh beinhaltet. Das Erwärmen des erfindungsgemäßen Schweißschuhs findet üblicherweise in einer Heizpresse statt, deren Steuerung und somit die Heizleistung auf die jeweiligen Besonderheiten der Wärmeleitfähigkeit des Schweißschuhs angepasst ist.

Ein weiterer Aspekt der Erfindung schließt ein Verfahren zum Verschweißen der Enden eines Gegenstands ein, bestehend aus einem thermoplastischen Material mittels einer erfindungsgemäßen Schweißvorrichtung. Das Verfahren umfasst:
- Bereitstellen eines erfindungsgemäßen Schweißschuhs mit einer Schweißzone,
- Einbringen der Enden des aus thermoplastischem Material bestehenden Gegenstands in den Schweißschuh zu einem stirnseitigen Kontakt,
- Erwärmen des thermoplastischen Materials in der Schweißzone,
- Verschweißen der Enden des thermoplastischen Materials in der Schweißzone,
- Entfernen des fertig geformten Gegenstands aus dem Schweißschuh.

Die Erfindung geht dabei von der Überlegung aus, ein Verfahren zum Verschweißen eines Gegenstands, beispielsweise eines Riemens, anzugeben. Das Riemenmaterial kann dabei zumindest zum Teil aus einem thermoplastischen Kunststoff bestehen, der gegebenenfalls eine Zugverstärkung aus Fasern, Stahl oder beigemischten Füllstoffen aufweisen kann.

In bevorzugter Ausgestaltung kann ein zweiteiliger Schweißschuh verwendet werden. In einen mehrteiligen Schweißschuh kann das zu schweißende Material einfacher eingelegt und nach dem Fügen wieder freigegeben werden.

Auch kann vorteilhafterweise ein als Profilform ausgebildeter Schweißschuh verwendet werden. Durch geeignete Ausnehmungen liegt das Material der zu verschweißenden Enden eines Riemens vollflächig an der Kontaktfläche des Schweißschuhs an. Mit einem Schweißschuh geeigneter Länge kann durch das Verschweißen der Enden ein endloser Riemen hergestellt werden.

In vorteilhafter Ausgestaltung der Erfindung kann als stirnseitiger Kontakt der Enden des Gegenstands ein Stumpfstoß, eine Schrägverbindung oder eine Fingerverbindung ausgebildet werden. Hierdurch können auch besonders belastbare Verbindungen hergestellt werden. Die Riemenenden werden hierdurch ohne Schweißwulst dauerhaft und homogen miteinander gefügt. Für eine Schrägverbindung können die Enden beispielsweise unter einem Winkel von 45° geschnitten sein.

Vorteilhafterweise kann als Gegenstand ein Antriebsriemen oder Transportriemen verwendet werden. Derartige Riemen können auch mehrschichtig, beispielsweise aus einer Kombination von Gummimaterial mit Polyurethan, aufgebaut sein. Zumindest ein Material ist in einem mehrschichtigen Aufbau dabei in Verbindung mit dem erfindungsgemäßen Schweißschuh schweißbar. Auch Zahnriemen mit Stahlzügen oder Fasersträngen sind mit zumindest einem thermisch schweißbaren Materialbestandteil auf diese Weise zu einem endlosen Ring herstellbar.

In bevorzugter Ausführungsform der Erfindung kann als Gegenstand ein Rundriemen, Keilriemen, Flachriemen, Zahnriemen, Keilleistengurt, Poly-V-Riemen oder ein anderweitiger Profilriemen verwendet werden.

In besonders bevorzugter Ausführungsform kann als thermoplastisches Material des Gegenstands ein Elastomer auf Polyurethan- oder Polyesterbasis verwendet werden. In der Antriebs- und Fördertechnik werden in großem Umfang derartige endlose Riemen eingesetzt. Diese Riemen werden zunächst in großen Längen mittels einer Extrusionsanlage, beispielsweise einem Schneckenextruder, gefertigt. Die Querschnittsform des Extrusionsprofils kann sehr variabel gestaltet sein und wird letztendlich durch den jeweiligen Verwendungszweck festgelegt. In der Praxis wird ein Extrusionsprofil auf die benötigte Länge abgelängt und die Enden miteinander verbunden. Extrusionsprofile haben üblicherweise über ihre gesamte Länge einen einheitlichen Querschnitt. Des Weiteren können mit einem erfindungsgemäßen Schweißschuh auch die Enden von Zahnriemen miteinander verschweißt werden.

In weiterer vorteilhafter Ausgestaltung der Erfindung kann ein thermoplastisches Material des Gegenstands mit Zugverstärkung durch Fasern, Stahl oder beigemischten Füllstoffen verwendet werden.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigen:
- Fig. 1: schematisch eine Ansicht eines Schweißschuhs, welcher nicht zur Erfindung gehört;
- Fig. 2: schematisch eine Schweißvorrichtung, welche nicht zur Erfindung gehört, mit eingelegtem Rundriemen;
- Fig. 3: schematisch eine weitere Ansicht eines Schweißschuhs; und
- Fig. 4: schematisch eine Ansicht auf die Rückseitenfläche eines Schweißschuhs.

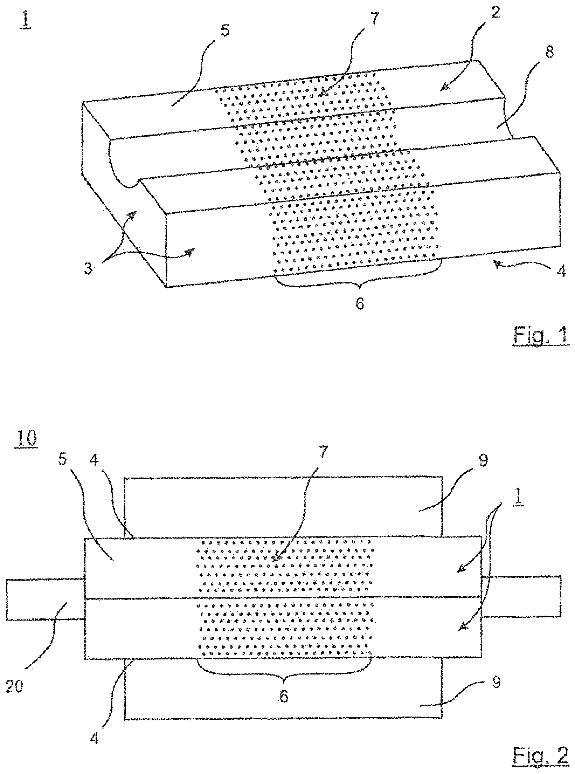

Fig. 1 zeigt schematisch eine Ansicht eines Schweißschuhs 1. Zur begrifflichen Vereinfachung werden auch die Teile von mehrteiligen Schweißschuhen 1 nicht mit weiteren Bezugszeichen versehen und einheitlich im Begriff Schweißschuh 1 mit eingebunden.

Die hier dargestellte untere Hälfte eines Schweißschuhs 1 weist eine Nut 8 zur Aufnahme eines in Fig. 1 nicht dargestellten Gegenstands auf. Die Nut 8 erstreckt sich durchgängig bis an die Seitenflächen 3, an denen der zu verschweißende Gegenstand aus dem Schweißschuh 1 wieder austritt. Ein Teil der Kontaktfläche 2 tritt im Bereich der Nut 8 in thermischen Kontakt mit der Oberfläche eines Gegenstands. Über die Rückseitenfläche 4 wird der Schweißschuh 1 flächig aufgeheizt und die Wärme zum Verschweißen der Enden des Gegenstands zur Nut 8 hin weitergeleitet.

Der Schweißschuh 1 besteht aus einem Basiswerkstoff 5 in den im Bereich der Schweißzone 6 ein thermisch gut leitender Materialzusatz 7 hinzugegeben ist. In diesem Fall handelt es sich bei dem Materialzusatz 7 beispielsweise um ein Metallpulver, welches im mittleren Drittel des Schweißschuhs 1 im gesamten Volumen eingebracht ist.

Fig. 2 zeigt schematisch eine Schweißvorrichtung 10 mit eingelegtem Gegenstand 20 in Form eines Rundriemens. Das Kernstück der Schweißvorrichtung 10 ist der Schweißschuh 1, welcher aus zwei identischen Teilen gemäß Fig. 1 aufgebaut ist. Die zu verschweißenden Enden des Rundriemens befinden sich nicht sichtbar im mittleren Bereich des geschlossenen Schweißschuhs 1 in mittigen Schweißzone 6. Auf den Rückseitenflächen 4 des Schweißschuhs 1 ist eine Heizeinrichtung 9 in flächigem Kontakt angeordnet. Von dort strömt die Wärme bevorzugt über den Materialzusatz 7 zur Schweißstelle. Der Basiswerkstoff 5 im äußeren Bereich wird nur wenig bzw. nicht aufgeheizt.

Die Schweißvorrichtung 10 umfasst zudem eine in der Figur 2 nicht weiter dargestellte Steuereinheit. Die Schweißvorrichtung 10 ist so konzipiert, dass ein einfaches Auswechseln des Schweißschuhs 1 für unterschiedliche Anwendungen möglich ist.

Zum Verschweißen von Riemenmaterial werden zunächst die Enden auf die Unterseite des Schweißschuhs 1 eingelegt. Die zweite Hälfte des Schweißschuhs 1 wird anschließend auf die Oberseite positioniert, so dass die Enden vom Schweißschuh 1 umschlossen werden. Mittels der Steuereinheit wird die Heizeinrichtung 9 aktiviert und mit einem Regelkreis überwacht. Die Steuereinheit regelt den Schweiß- und gegebenenfalls auch den Abkühlvorgang. Eine geeignet ausgewählte Schweißtemperatur sorgt für ein nahtloses Verbinden der beiden Riemenenden zu einem Endlosprodukt.

Nach Ablauf der Schweißzeit kann der Schweißschuh 1 auch entfernt und in eine Abkühlpresse eingelegt werden, um schnell abzukühlen. Dadurch muss nicht, wie sonst üblich, die gesamte Schweißpresse gekühlt werden, wodurch sich die Fertigungszeit erheblich reduziert. Zudem wird die Schweißvorrichtung 10 nicht durch Kühlvorgänge blockiert und steht sofort für weitere Schweißungen zur Verfügung, ohne erst wieder aufgeheizt werden zu müssen. Nach Erreichen einer bestimmten Temperaturschwelle kann der Riemen aus der Form genommen werden. Typische Arbeitsabläufe bis zum fertigen und abgekühlten Produkt dauern meist nur wenige Minuten. Die Schweißgeräte 10 können auch tragbar konstruiert sein, um nach Bedarf endlose Riemenprofile für Antriebe oder ähnliches unmittelbar vor Ort zu fertigen.

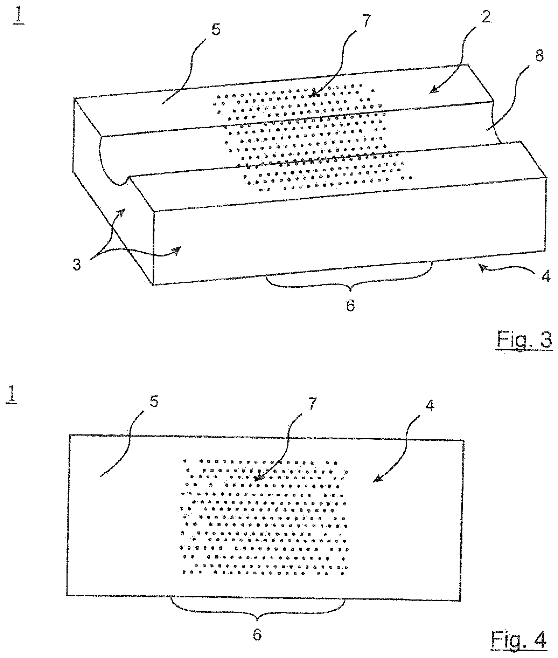

Fig. 3 zeigt schematisch eine weitere Ansicht eines Schweißschuhs 1. Im Unterschied zu Fig. 1 ist der gut wärmeleitende Materialzusatz 7 nicht mehr bis zu den Seitenflächen 3 in den Basiswerkstoff 5 eingebracht, sondern konzentriert sich im inneren Volumen der Schweißzone 6.

Zum besseren Verständnis zeigt Fig. 4 schematisch eine Ansicht auf die Rückseitenfläche 4 des Schweißschuhs 1 aus Fig. 3. Die Rückseitenfläche 4 stellt die Kontaktfläche für die Heizeinrichtung dar. In den zu beheizenden Bereichen der Rückseitenfläche 4 ist der Materialzusatz 7 im Basiswerkstoff 5 bis an die Oberfläche eingebracht. Auf diese Weise wird die zum Schweißen benötigte Wärme gezielt im Schweißschuh 1 an die Schweißstelle im Inneren geleitet.

### Bezugszeichenliste:

- 1: Schweißschuh
- 2: Kontaktfläche
- 3: Seitenfläche
- 4: Rückseitenfläche
- 5: Basiswerkstoff
- 6: Schweißzone
- 7: Materialzusatz
- 8: Nut
- 9: Heizeinrichtung
- 10: Schweißvorrichtung
- 20: Gegenstand

## Patentansprüche

1. Schweißschuh (1) mit einer Kontaktfläche (2), Seitenflächen (3) und einer Rückseitenfläche (4), enthaltend einen Basiswerkstoff (5) auf Kunststoffbasis mit einer Schweißzone (6) zum Verschweißen eines Gegenstands, wobei zumindest in einem Teilbereich der Schweißzone (6) ein die Wärmeleitfähigkeit erhöhender Materialzusatz (7) eingebracht ist,
**dadurch gekennzeichnet, dass**
der die Wärmeleitfähigkeit erhöhende Materialzusatz (7) inhomogen verteilt ist.

2. Schweißschuh (1) nach Anspruch 1,
**dadurch gekennzeichnet, dass**
der Mengenanteil des Materialzusatzes (7) in der Schweißzone (6) zumindest in einer Richtung zu den Seitenflächen (3) hin abnimmt.

3. Schweißschuh (1) nach einem der Ansprüche 1 oder 2,
**dadurch gekennzeichnet, dass**
der Basiswerkstoff (5) ein homogen gesinterter und temperaturbeständiger Kunststoff ist.

4. Schweißschuh (1) nach einem der Ansprüche 1, 2 oder 3,
**dadurch gekennzeichnet, dass**
der die Wärmeleitfähigkeit erhöhende Materialzusatz (7) Metallpulver oder Keramikpulver oder ein Faserwerkstoff ist.

5. Schweißschuh (1) nach Anspruch 4,
**dadurch gekennzeichnet, dass**
das Metallpulver oder Keramikpulver einen mittleren Korndurchmesser von 10 bis 250 µm aufweist.

6. Schweißschuh (1) nach einem der Ansprüche 1 bis 5,
**dadurch gekennzeichnet, dass**
der die Wärmeleitfähigkeit erhöhende Materialzusatz (7) Aluminium, Kupfer, Messing, Stahl, Edelstahl, Bronze, Gold, Silber, Siliciumcarbid, Aluminiumnitrid, Borcarbid, Bornitrid oder Mischungen der genannten Stoffe ist.

7. Schweißschuh (1) nach einem der Ansprüche 1 bis 6,
**dadurch gekennzeichnet, dass**
der die Wärmeleitfähigkeit erhöhende Materialzusatz (7) in einem Volumenanteil von 10 bis 80 %, insbesondere von 40 bis 70 %, eingebracht ist.

8. Schweißschuh (1) nach einem der Ansprüche 1 bis 7,
**dadurch gekennzeichnet, dass**
der Basiswerkstoff (5) Polytetrafluorethylen ist.

9. Schweißvorrichtung (10),
**gekennzeichnet durch**
einen Schweißschuh (1) nach einem der Ansprüche 1 bis 8.

10. Verfahren zum Verschweißen der Enden eines Gegenstands (20), bestehend aus einem thermoplastischen Material mittels einer Schweißvorrichtung (10) nach Anspruch 9, wobei das Verfahren umfasst:
- Bereitstellen eines Schweißschuhs (1) mit einer Schweißzone (6) gemäß einem der vorstehenden Ansprüche 1 bis 8,
- Einbringen der Enden des aus thermoplastischem Material bestehenden Gegenstands (20) in den Schweißschuh (1) zu einem stirnseitigen Kontakt,
- Erwärmen des thermoplastischen Materials in der Schweißzone (6),
- Verschweißen der Enden des thermoplastischen Materials in der Schweißzone (6),
- Entfernen des fertig geformten Gegenstands (20) aus dem Schweißschuh (1).

11. Verfahren nach Anspruch 10,
**dadurch gekennzeichnet, dass**
ein zweiteiliger Schweißschuh (1) verwendet wird.

12. Verfahren nach Anspruch 10 oder 11,
**dadurch gekennzeichnet, dass**
ein als Profilform ausgebildeter Schweißschuh (1) verwendet wird.

13. Verfahren nach einem der Ansprüche 10 bis 12,
**dadurch gekennzeichnet, dass**
als stirnseitiger Kontakt der Enden des Gegenstands (20) ein Stumpfstoß, eine Schrägverbindung oder eine Fingerverbindung ausgebildet wird.

14. Verfahren nach einem der Ansprüche 10 bis 13,
**dadurch gekennzeichnet, dass**
als Gegenstand (20) ein Antriebsriemen oder Transportriemen verwendet wird.

15. Verfahren nach einem der Ansprüche 10 bis 14,
**dadurch gekennzeichnet, dass**
als Gegenstand (20) ein Rundriemen, Keilriemen, Flachriemen, Zahnriemen, Keilleistengurt, Poly-V-Riemen oder ein anderweitiger Profilriemen verwendet wird.

16. Verfahren nach einem der Ansprüche 10 bis 15,
**dadurch gekennzeichnet, dass**
als thermoplastisches Material des Gegenstands (20) ein Elastomer auf Polyurethan- oder Polyesterbasis verwendet wird.

17. Verfahren nach einem der Ansprüche 10 bis 16,
**dadurch gekennzeichnet, dass**
ein thermoplastisches Material des Gegenstands (20) mit Zugverstärkung durch Fasern, Stahl oder beigemischten Füllstoffen verwendet wird.

## Claims

1. Welding shoe (1) with a contact surface (2), side surfaces (3) and a rear surface (4), comprising a plastic-based base material (5) with a welding zone (6) for welding an object, an additive (7) that increases the thermal conductivity being incorporated at least in a partial region of the welding zone (6),
**characterized in that**
the additive (7) that increases the thermal conductivity is distributed inhomogeneously.

2. Welding shoe (1) according to claim 1,
**characterized in that**
the quantitative proportion of the additive (7) in the welding zone (6) decreases at least in a direction towards the side surfaces (3).

3. Welding shoe (1) according to either of claims 1 and 2,
**characterized in that**
the base material (5) is a homogeneously sintered and thermally stable plastic.

4. Welding shoe (1) according to one of claims 1, 2 or 3,
**characterized in that**
the additive (7) that increases the thermal conductivity is metal powder or ceramic powder or a fibre material.

5. Welding shoe (1) according to claim 4,
**characterized in that**
the metal powder or ceramic powder has an average grain diameter of 10 to 250 µm.

6. Welding shoe (1) according to one of claims 1 to 5,
**characterized in that**
the additive (7) that increases the thermal conductivity is aluminium, copper, brass, steel, high-grade steel, bronze, gold, silver, silicon carbide, aluminium nitride, boron carbide, boron nitride or mixtures of said substances.

7. Welding shoe (1) according to one of claims 1 to 6,
**characterized in that**
the additive (7) that increases the thermal conductivity is incorporated in a volumetric proportion of 10 to 80%, in particular of 40 to 70%.

8. Welding shoe (1) according to one of claims 1 to 7,
**characterized in that**
the base material (5) is polytetrafluoroethylene.

9. Welding device (10),
**characterized by**
a welding shoe (1) according to one of claims 1 to 8.

10. Method for welding the ends of an object (20), consisting of a thermoplastic material, by means of a welding device (10) according to claim 9, the method comprising:
providing a welding shoe (1) having a welding zone (6) according to one of the preceding claims 1 to 8,
introducing the ends of the object (20) consisting of thermoplastic material into the welding shoe (1) to establish end-on contact,
heating the thermoplastic material in the welding zone (6),
welding the ends of the thermoplastic material in the welding zone (6),
removing the finished formed object (20) from the welding shoe (1).

11. Method according to claim 10,
**characterized in that**
a two-part welding shoe (1) is used.

12. Method according to claim 10 or 11,
**characterized in that**
a welding shoe (1) formed as a profile shape is used.

13. Method according to one of claims 10 to 12,
**characterized in that**
a butt joint, a bevelled connection or a finger splice is formed as the end-on contact of the ends of the object (20).

14. Method according to one of claims 10 to 13,
**characterized in that**
a drive belt or transport belt is used as the object (20).

15. Method according to one of claims 10 to 14,
**characterized in that**
a round belt, V-belt, flat belt, toothed belt, wedge-profile belt, poly-V belt or an in some other way profiled belt is used as the object (20).

16. Method according to one of claims 10 to 15,
**characterized in that**
a polyurethane- or polyester-based elastomer is used as the thermoplastic material of the object (20).

17. Method according to one of claims 10 to 16,
**characterized in that**
a thermoplastic material of the object (20) with tensile reinforcement by fibres, steel or admixed fillers is used.

## Revendications

1. Patin de soudage (1) avec une surface de contact (2), des faces latérales (3) et une face arrière (4), contenant un matériau de base (5) à base de matière plastique avec une zone de soudage (6) pour souder un objet, dans lequel est introduite dans au moins une partie de la zone de soudage (6) une matière supplémentaire (7) augmentant la conductivité thermique, **caractérisé en ce que** la matière supplémentaire (7) augmentant la conductivité thermique est répartie de manière non homogène.

2. Patin de soudage (1) selon la revendication 1, **caractérisé en ce que** la proportion de matière supplémentaire (7) dans la zone de soudage (6) diminue vers les faces latérales (3) au moins dans une direction.

3. Patin de soudage (1) selon l'une des revendications 1 ou 2, **caractérisé en ce que** le matériau de base (5) est une matière plastique frittée de manière homogène et résistante à la chaleur.

4. Patin de soudage (1) selon l'une des revendications 1, 2 ou 3, **caractérisé en ce que** la matière supplémentaire (7) augmentant la conductivité thermique est une poudre métallique ou une poudre céramique ou un matériau à base de fibres.

5. Patin de soudage (1) selon la revendication 4, **caractérisé en ce que** la poudre métallique ou la poudre céramique présente un diamètre de grain moyen de 10 à 250 µm.

6. Patin de soudage (1) selon l'une des revendications 1 à 5, **caractérisé en ce que** la matière supplémentaire (7) augmentant la conductivité thermique est de l'aluminium, du cuivre, du laiton, de l'acier, de l'acier inoxydable, du bronze, de l'or, de l'argent, du carbure de silicium, du nitrure d'aluminium, du carbure de bore, du nitrure de bore ou des mélanges des substances citées.

7. Patin de soudage (1) selon l'une des revendications 1 à 6, **caractérisé en ce que** la matière supplémentaire (7) augmentant la conductivité thermique est introduite dans une proportion en volume de 10 à 80 %, en particulier de 40 à 70 %.

8. Patin de soudage (1) selon l'une des revendications 1 à 7, **caractérisé en ce que** la matière de base (5) est du polytétrafluoréthylène.

9. Dispositif de soudage (10), **caractérisé par** un patin de soudage (1) selon l'une des revendications 1 à 8.

10. Procédé de soudage des extrémités d'un objet (20), constitué d'une matière thermoplastique au moyen d'un dispositif de soudage (10) selon la revendication 9, le procédé comprenant :
- la fourniture d'un patin de soudage (1) avec une zone de soudage (6) selon l'une des revendications 1 à 8 précédentes,
- l'introduction des extrémités de l'objet (20) en matière thermoplastique dans le patin de soudage (1) pour une mise en contact bout à bout,
- le chauffage de la matière thermoplastique dans la zone de soudage (6),
- le soudage des extrémités de la matière thermoplastique dans la zone de soudage (6),
- l'enlèvement de l'objet (20) moulé fini du patin de soudage (1).

11. Procédé selon la revendication 10, **caractérisé en ce qu'**un patin de soudage (1) en deux parties est utilisé.

12. Procédé selon la revendication 10 ou 11, **caractérisé en ce qu'**un patin de soudage (1) de forme profilée est utilisé.

13. Procédé selon l'une des revendications 10 à 12, **caractérisé en ce que** le contact bout à bout des extrémités de l'objet (20) est une jonction d'aboutement, une jonction oblique ou une jonction à doigt.

14. Procédé selon l'une des revendications 10 à 13, **caractérisé en ce que** l'objet (20) est une courroie de transmission ou une bande transporteuse.

15. Procédé selon l'une des revendications 10 à 14, **caractérisé en ce que** l'objet (20) est une courroie ronde, une courroie trapézoïdale, une courroie plate, une courroie crantée, une courroie avec profil de guidage, une courroie Poly-V ou une autre courroie profilée.

16. Procédé selon l'une des revendications 10 à 15, **caractérisé en ce que** la matière thermoplastique utilisée pour l'objet (20) est un élastomère à base de polyuréthane ou de polyester.

17. Procédé selon l'une des revendications 10 à 16, **caractérisé en ce que** la matière thermoplastique utilisée pour l'objet (20) est renforcée en traction par des fibres, de l'acier ou des charges mélangées.
